# EUROPEAN PATENT APPLICATION

(11) **EP 1 659 546 A1**
(43) Date of publication of application: **24.05.2006**
(21) Application number: 04292735.0
(22) Date of filing: 18.11.2004
(51) Int. Cl.: G07F 7/08, G07F 7/10, G06K 19/00

(54) **Tamper-resistant device for securing an electronic transaction**

(71) Applicant: Axalto SA, 92120 Montrouge (FR)
(72) Inventor: Drabczuk, Nicolas, 92120 Montrouge (FR)

(57) **Abstract**

A tamper-resistant (SC) device secures an electronic transaction in the following manner. The tamper-resistant device comprises a processor that provides (ST10) an audio signal (AUD[TRE]) that produces a spoken text when applied to an electro-acoustic transducer (HPH) via an audio-signal path. The processor may manage (ST11) the electronic transaction in dependence on a data (ACC) that the processor receives subsequent to the audio signal.

## Description

### FIELD OF THE INVENTION

An aspect of the invention relates to tamper-resistant device arranged to secure an electronic transaction with a remote entity. The tamper-resistant device may be, for example, a smartcard. The electronic transaction is any process that involves an electronic signature of data. The electronic transaction may be, for example, a purchase of goods or services via the Internet. The electronic signature guarantees user authentication and non-repudiation. Other aspects of the invention relate to a processor for a tamper-resistant device, an electronic transaction system, a method of securing an electronic transaction, a computer-program product for a tamper-resistant device, and a coupling device via which a tamper-resistant device can be coupled to a communication apparatus.

### BACKGROUND OF THE INVENTION

A smartcard may secure an electronic transaction in the following manner. The smartcard is inserted in a terminal. The terminal can communicate with an entity with which the electronic transaction needs to be carried out. The terminal may also represent that entity. The terminal requests the user to type a so-called personal identification number, which is known to a rightful user only. The smartcard checks whether the personal identification number, which the user has typed, is correct or not. The smartcard will electronically sign data only if the personal identification number is correct. An electronic signature uniquely identifies the smartcard. Consequently, the electronic signature proves that the rightful user has signed the data concerned. There is no other smartcard that could have established the electronic signature. Only the rightful user can cause the smartcard to electronically sign data by means of his or her personal identification number.

### SUMMARY OF THE INVENTION

According to an aspect of the invention, a tamper-resistant device secures an electronic transaction in the following manner. The tamper-resistant device comprises a processor that provides an audio signal that produces a spoken text when applied to an electro-acoustic transducer via an audio-signal path. Preferably, the processor manages the electronic transaction in dependence on a data that the processor receives subsequent to the audio signal.

The invention takes the following aspects into consideration. A terminal is an intermediate that allows communication between a user and a tamper-resistant device. However, there is a risk that a fraudulent person tampers with the terminal. For example, the fraudulent person may succeed in making the terminal display data that is different from the data that the tamper-resistant device electronically signs. The rightful user is fooled. What the rightful user sees is not really what he or she signs.

The terminal constitutes a weak link in terms of security. Making the terminal tamper resistant alleviates this problem. Preferably, the terminal should be as tamper resistant as the tamper-resistant device. However this is relatively costly. In any case, the terminal forms an additional possibility of attack for a fraudulent person, even if the terminal is relatively tamper resistant.

In accordance with the aforementioned aspect of the invention, the tamper-resistant device comprises a processor that provides an audio signal that produces a spoken text when applied to an electro-acoustic transducer via an audio-signal path.

Accordingly, it is possible for the tamper-resistant device to communicate more directly with the user, for example, via a simple headphone. The terminal, which is vulnerable to a certain extent, can be bypassed. It will be more difficult for a fraudulent person to breach security. Tampering with the terminal will not be sufficient. Consequently, the invention allows a relatively high degree of security.

The audio signal may relate to any critical aspect of an electronic transaction. For example, the audio signal, which the processor provides, may represent a data element that forms part of the electronic transaction. Accordingly, the user can have sufficient certainty about the data that the tamper-resistant device electronically signs. The user can be sufficiently sure that what he or she hears really is what the tamper-resistant device signs. Preferably, the processor manages the electronic transaction in dependence on a data that the processor receives subsequent to the audio signal. This data may represent, for example, an acceptance or a refusal of the transaction or a data element thereof. The processor then acts accordingly.

Another example concerns a secret that a rightful user and the tamper-resistant device share, such as, for example, a personal identification number. The tamper-resistant device may request a user, by means of the audio signal, to enter the personal identification number in accordance with a particular modification. The particular modification is randomly chosen among various different possible modifications. Only the tamper-resistant device and the user know the modification that has been chosen for a particular electronic transaction. A third person will have no knowledge of that. The user may enter into the terminal the personal identification number in accordance with the modification requested. A fraudulent person, who has succeeded to breach the terminal's security, may detect that. However, the fraudulent person can not readily determine the personal identification number because he or she does not know what modification has been brought to the personal identification code. The fraudulent person intercepts a code that is substantially meaningless.

These and other aspects of the invention will be described in greater detail hereinafter with reference to drawings.

### BRIEF DESCRIPTION OF THE DRAWINGS

FIG. 1 is a pictorial diagram that illustrates a smartcard.
FIG. 2 is a pictorial diagram that illustrates a cross-section of the smartcard.
FIG. 3 is a block diagram of an integrated circuit that forms part of the smartcard.
FIG. 4 is a signal diagram that illustrates an audio signal that the smartcard provides.
FIG. 5 is a block diagram of an electronic transaction system of which the smartcard forms part.
FIG. 6 is an electrical diagram that illustrates an audio path via which the smartcard can apply the audio signal to a headphone.
FIGS. 7A and 7B are flowchart diagrams that illustrate operations that the smartcard carries out.

### DETAILED DESCRIPTION

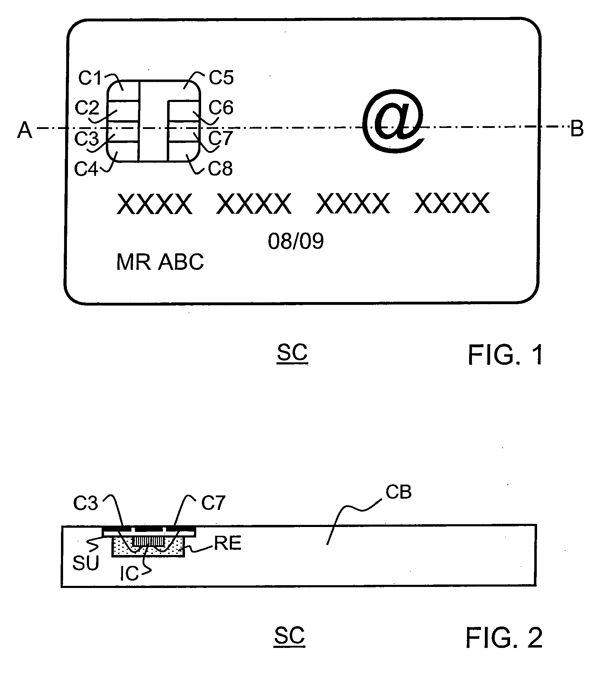

FIG. 1 illustrates a smartcard SC. The smartcard SC has dimensions and electrical contacts that conform with the ISO7816 standard. There are eight electrical contacts C1-C8. Electrical contact C1 is a power supply voltage contact. Electrical contact C5 is a signal ground contact. The smartcard SC can receive and transmit data in accordance with a universal serial bus standard via electrical contacts C4 and C8.

FIG. 2 illustrates the smartcard SC in a cross section along a line A-B shown in FIG. 1. The smartcard SC comprises a card body CB and various elements that are embedded in the card body CB. These elements, which constitute an electronic module, comprise a support SU, an integrated circuit IC, a resin cover RE, and the aforementioned electrical contacts C1-C8, of which C3 and C7 are shown only. The integrated circuit IC is mounted on the support SU and electrically coupled to the electrical contacts C1-C8, which are present on the support SU. The resin cover RE protects the integrated circuit IC.

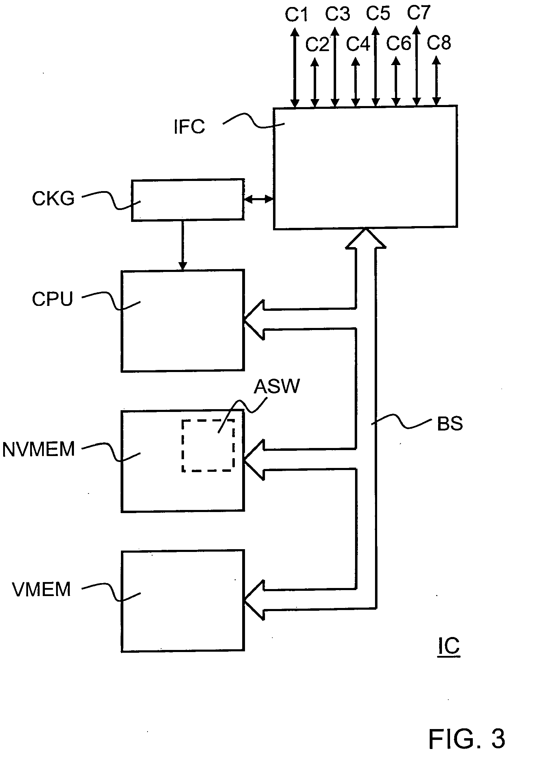

FIG. 3 illustrates the integrated circuit IC. The integrated circuit IC comprises various functional entities: an interface circuit IFC, a clock generator CKG, a central processing unit CPU, a nonvolatile memory NVMEM, a volatile memory VMEM, and a bus BS. The nonvolatile memory NVMEM may comprise, for example, various memory circuits such as a read-only memory circuit (ROM) and an electrically erasable programmable read-only memory circuit (EEPROM). The volatile memory VMEM may comprise, for example, a random access memory circuit (RAM) and various registers.

The integrated circuit IC carries out various different operations, such as, for example, an authentication on the basis of electronic keys. The nonvolatile memory NVMEM comprises a set of instructions, i.e. software, which causes the central processing unit CPU to effect these various different operations. The volatile memory VMEM stores intermediate results of the operations. An operation may be defined by a software module, such as, for example, a subroutine.

The nonvolatile memory NVMEM comprises audio software ASW. The audio software ASW is an assembly of instructions and other data that allows the smartcard SC to generate an audio signal. The audio software ASW may comprise, for example, various digital audio records that represent phonemes, words or groups of words. The audio signal may represent data that the smartcard SC has received from an external entity. The audio signal may also represent data that the smartcard SC has internally generated. In effect, the audio software ASW translates data into an audio signal. Preferably, this translation should be unambiguous: two different data should not produce an identical audio signal.

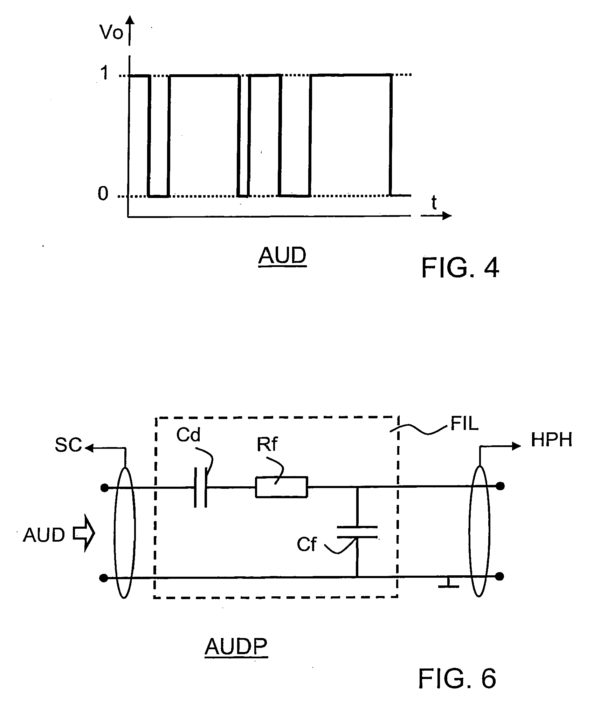

FIG. 4 illustrates an audio signal that the smartcard SC provides. FIG. 4 comprises a horizontal axis, which represents time t, and a vertical axis, which represents an output voltage Vo. The audio signal is a binary signal whose value is either 0 or 1. The binary value 0 corresponds with a relatively low output voltage, for example, 0.3 volts. The binary value 1 corresponds with a relatively high output voltage, for example, 4.7 volts. The audio signal comprises various pulses, each having a variable width. In effect, the audio signal is a pulse-width modulated signal. Modulation constitutes audio information. A bitstream may form the audio signal, which is illustrated in FIG. 4. Successive bits that have the binary value 1 form a pulse. The number of these bits defines the width of the pulse.

An operation that the smartcard SC carries out may involve data communication with an external entity, such as, for example, a personal computer. The interface circuit IFC allows such data communication to take place in accordance with a universal serial bus standard via electrical contacts C4 and C8. Electrical contacts C1 and C5 are needed to supply power to the integrated circuit IC. Consequently, electrical contacts C2, C3, C6 and C7 are available for other purposes while a USB data communication takes place. For example, the smartcard SC can provide the audio signal, which is illustrated in FIG. 4, via any of the aforementioned electrical contacts.

USB data communication requires a relatively precise clock signal. The clock generator CKG provides a suitable clock signal. The clock generator CKG need not comprise a relatively precise oscillator in order to achieve sufficient precision. US patent application published under number 2004/0148539 describes a technique for generating a relatively precise local clock signal on the basis of downstream received universal serial bus signals.

The clock signal that the clock generator CKG provides can be used for purposes other than USB data communication. For example, the central processing unit CPU may generate the audio signal, which is illustrated in FIG. 4, on the basis of the clock signal and the audio software ASW, which is stored in the nonvolatile memory NVMEM. The clock signal defines a time grid. A rising edge of a pulse, which goes from 0 to 1, occurs on a grid point. The same applies to a falling edge, which goes from 1 to 0. In case a bit stream forms the audio signal, the clock defines bit duration and, consequently, the width of a pulse.

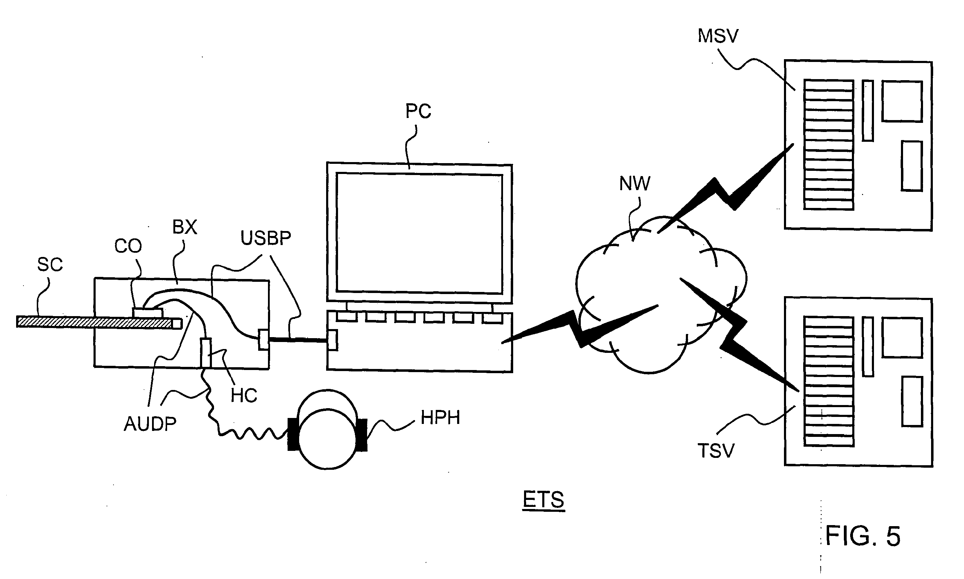

FIG. 5 illustrates an electronic transaction system ETS that comprises the smartcard SC illustrated in FIGS. 1 and 2. The electronic transaction system ETS further comprises a smartcard coupler BX, a headphone HPH, a personal computer PC, a network NW, a merchant server MSV, and a trusted server TSV. The smartcard SC is inserted in the smartcard coupler BX. The smartcard coupler BX comprises a contact assembly CO that is complementary with the electrical contacts C1-C8 illustrated in FIG. 1. A universal serial bus path USBP extends from the contact assembly CO to the personal computer PC. An audio-signal path AUDP extends from the contact assembly CO to the headphone HPH. The audio-signal path AUDP comprises a headphone connector HC, which forms part of the smartcard coupler BX. The headphone connector HC allows the headphone HPH to be plugged into the smartcard coupler BX. The personal computer PC, the merchant server MSV, and a trusted server TSV are coupled to the network NW.

The smartcard SC can apply an audio signal to the headphone HPH via the audio-signal path AUDP and any of the electrical contacts C2, C3, C6 and C7. The personal computer PC and the smartcard SC can exchange data in accordance with the universal serial bus standard via the universal serial bus path USBP and electrical contacts C4 and C8 illustrated in FIG. 1. The personal computer PC, the merchant server MSV, and the trusted server TSV can communicate with each other via the network NW. Accordingly, the smartcard SC can exchange data with the merchant server MSV via the personal computer PC, which is coupled to the network NW.

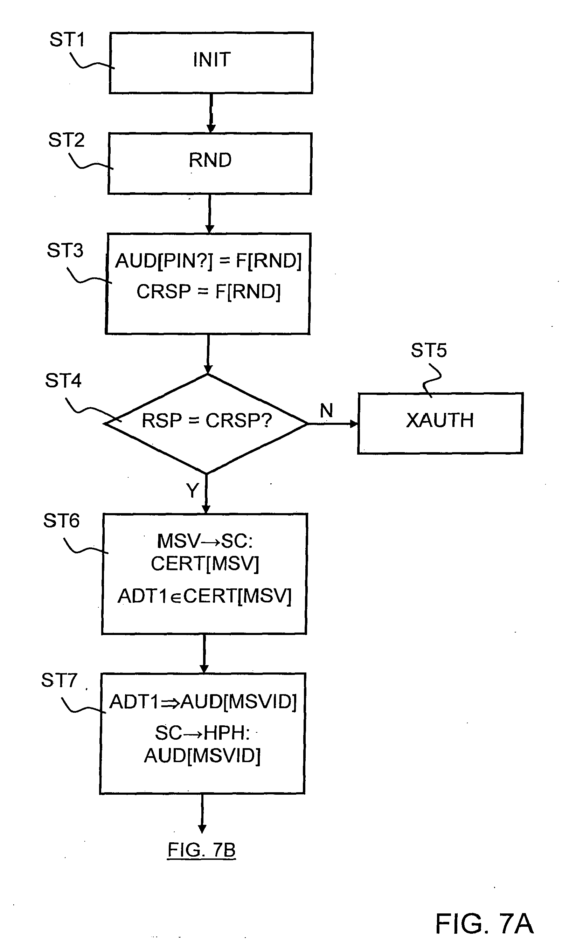

FIG. 6 is an electrical representation of the audio-signal path AUDP, via which the smartcard SC applies an audio signal to the headphone HPH. The audio-signal path AUDP comprises a filter resistance Rf, a filter capacitance Cf, and a decoupling capacitance Cd. In combination, these elements constitute a filter FIL that transforms the audio signal, which is illustrated in FIG. 4, into audio signal of analog nature, which is suitable for the headphone HPH. More precisely, the filter resistance Rf and the filter capacitance Cf constitute a low pass filter that suppresses high frequency components in the audio signal. This corresponds to demodulation of the pulse-width modulated signal that the audio signal forms. The audio signal, which is illustrated in FIG. 4, has a direct-current component. The decoupling capacitance Cd prevents that the direct-current component reaches the headphone HPH, which could otherwise cause a malfunctioning.

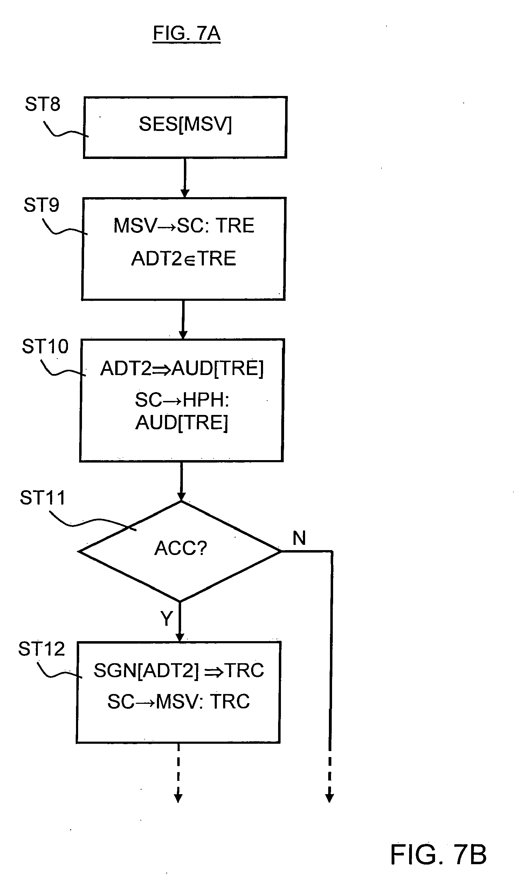

FIGS. 7A and 7B illustrate operations that the smartcard SC carries out within the electronic transaction system ETS illustrated in FIG. 5. The operations are illustrated in the form of a series of steps ST1-ST12. FIG. 7A illustrates steps ST1-ST7. FIG. 7B illustrates steps ST8-ST12. The illustrated operations typically result from suitable software, which is stored in the nonvolatile memory NVMEM of the smartcard SC, and which the central processing unit CPU executes.

In step ST1, the smartcard SC carries out an initialization procedure (INIT). The initialization procedure starts when, for example, the smartcard SC is inserted into the smartcard coupler BX. A power-up phase typically forms part of the initialization procedure. The smartcard SC first receives a supply voltage from the personal computer PC. Subsequently, the smartcard SC detects that the universal serial bus path USBP couples the smartcard SC with the personal computer PC. The international application published under number WO 02/31762 describes such detection. Accordingly, the interface circuit IFC of the integrated circuit IC, which is illustrated in FIG. 3, is set to operate in a universal serial bus mode. The smartcard SC signals the personal computer PC that a universal serial bus device, which is the smartcard SC itself, has been coupled to the universal serial bus path USBP. US patent number 6,543,690 describes such signaling.

In steps ST2-ST5, the smartcard SC checks whether a rightful user is present or not. This is often referred to as user authentication. User authentication is generally based on a secret code, for example, a so-called personal identification number. The personal identification number is a secret that the rightful user and the smartcard SC share. The personal identification number may be, for example, a 4-digit number, such as 1234.

In step ST2, the smartcard SC generates a random number (RND) by means of, for example, a software module that is stored in the nonvolatile memory NVMEM. The random number is a number that is randomly selected from a set of various different numbers. An audio signal and a correct response is associated with each number in the set. The audio signal forms a request to type the personal identification number in a modified manner, which constitutes a certain code. This code is the correct response.

The following is an example. The smartcard SC randomly selects a number from a set of 3 different numbers: 1, 2, and 3. Number 1 corresponds with an audio signal that forms the request "please type your personal identification number with each digit incremented by one". Let it be assumed that the personal identification number is 1234. In that case, the correct response is 2345. Number 2 corresponds with an audio signal that forms the request "please type your personal identification number followed by 5". In that case, the correct response is 12345. Number 3 corresponds with an audio signal that forms the request "please type your personal identification number inversely". In that case, the correct response is 4321.

The example hereinbefore is a simple implementation. In a more sophisticated implementation, a randomly selected number may comprise, for example, more than one digit. The most significant digit may define, for example, a certain type of modification of the personal identification number. Another digit may define a parameter within that type of modification. For example, let it be assumed that the smartcard SC has randomly selected number 12. The most significant digit, which is 1, defines a request of the type "please type your personal identification number with each digit incremented by X", X being a parameter. The other digit of the randomly selected number, which is 2, represents the parameter of the aforementioned type of request. Accordingly, number 12, which smartcard SC has randomly selected, corresponds with an audio signal that forms the request "please type your personal identification number with each digit incremented by two".

In step ST3, the smartcard SC generates the audio signal that corresponds with the number that has randomly been selected in step ST2 (AUD[PIN?] = F[RND]). For example, let it be assumed that the smartcard SC has randomly selected the number 12 having a signification as described hereinbefore. The most significant digit, which is 1, indicates a specific digital audio record in the audio software ASW. This digital audio record represents the following groups of words: "please type your personal identification number with each digit incremented by". The other digit, which is 2, indicates a digital audio record that phonetically represents the digit concerned, which "two" in this example. The smartcard SC combines these digital audio records so as to obtain an audio signal that forms the request "please type your personal identification number with each digit incremented by two". The smartcard SC applies the audio signal to the headphone HPH, which is illustrated in FIG. 5, via the audio-signal path AUDP. In addition, the smartcard SC establishes the correct response that is associated with the number that has randomly been selected (CRSP = F[RND]). In the example given, the correct response is 3456.

In step ST4, the smartcard SC detects whether there is a response subsequent to the audio signal, which has been applied to the headphone HPH. The smartcard SC checks whether the response is the correct response (RSP = CRSP?). The smartcard SC may cause the personal computer PC to display an authorization failure message if the response is incorrect (XAUTH). This is done in step ST5.

The smartcard SC may allow one or more retries if the response is incorrect. The smartcard SC may apply the same audio signal anew to the headphone HPH. Steps ST3 and ST4 are carried out anew. Alternatively, the smartcard SC may randomly select another number so as to request the personal identification number in accordance with a different modification. Steps ST2, ST3 and ST4 are carried out anew. The smartcard SC may block itself if a predefined numbers of retries have successively failed. In that case, the smartcard SC can no longer be used until, for example, the smartcard SC has received a suitable unblocking code.

The smartcard SC may receive the response in various different manners. For example, the smartcard SC may signal the personal computer PC via the universal serial bus path USBP that the smartcard SC expects the response. A user types the response on a keyboard, which is coupled to the personal computer PC. The personal computer PC transfers the response to the smartcard SC via the universal serial bus path USBP. As another example, the smartcard coupler BX may comprise a keyboard on which the user may type the response.

It should be noted that the user authentication described hereinbefore is relatively secure. Even if a fraudulent person intercepts the response, he or she will not immediately have the personal identification number. What is more, there is little chance that the response, which has been intercepted, will be correct in a subsequent user authentication. In a subsequent user authentication, the smartcard SC will most likely request the user to enter his or her personal identification number in accordance with a different modification. The correct response will be different. The larger the set of different random numbers is, the less likely it will be that the fraudulent person can successfully authenticate himself or herself with respect to the smartcard SC.

It will be assumed hereinafter that the smartcard SC has received the correct response. The smartcard SC has authenticated the rightful user, because only he or she is supposed to know the personal identification number. Following successful user authentication, the electronic keys, which are stored in the nonvolatile memory NVMEM, become available. The electronic keys can be seen to be kept in a safe, as it were. The personal identification number opens the safe.

The electronic keys allow the smartcard SC to authenticate itself, or the personal computer PC, with respect to an entity that is coupled to the network NW. The merchant server MSV and the trusted server TSV constitute such entities. Accordingly, the merchant server MSV can be sufficiently sure that a communication with the personal computer PC, to which the smartcard SC is coupled, involves the rightful user. Only he or she can make the electronic keys available for authentication. The electronic keys may also be used to secure a communication via the network NW by means of encryption. It will be assumed hereinafter that the rightful user communicates with the merchant server MSV via the personal computer PC and the smartcard SC coupled thereto.

In step ST6, the smartcard SC receives a certificate, which originates from the merchant server MSV (MSV→SC: CERT[MSV]). The merchant server MSV has an identity. The certificate comprises various data elements that relate to the identity of the merchant server MSV. The certificate further comprises a digital signature, which has been established on the basis of an electronic key within the trusted server TSV. This electronic key may be, for example, a so-called private key of the trusted server TSV. The smartcard SC can verify the digital signature by means of, for example, a so-called public-key that is associated with the private key of the trusted server TSV. Accordingly, the smartcard SC can be sufficiently sure that the identity of the merchant server MSV is correct.

The certificate of the merchant server MSV comprises audio data (ADT1∈CERT[MSV]). The audio data also relates to the identity of the merchant server MSV. The digital signature takes the audio data into account. Accordingly, the smartcard SC can be sufficiently sure that the audio data correctly represents the identity of the merchant server MSV. The audio data may have any of numerous different formats. For example, the audio data may be a digital audio file in a particular format such as, for example, a so-called MP3 or wave (.wav) format. The audio data may also result from a digital audio file, which has been compressed in accordance with a particular compression algorithm based on, for example, Huffman coding or dictionary coding. The audio data may also be simple plain text, which a speech generator can transform into spoken word.

In step ST7, the smartcard SC establishes an audio signal on the basis of the audio data, which is comprised in the certificate (ADT1⇒AUD[MSVID]). For example, the smartcard SC may decompress the audio data so as to obtain the audio signal, if the audio data is in a compressed form. As another example, the smartcard SC may transform the audio data into spoken word, if the audio data is simple plain text. In general, any suitable software may transform the audio data into the audio signal. The smartcard SC should preferably comprise software that is compatible with the audio data in the certificate, and vice versa.

The smartcard SC applies the audio signal, which represents the identity of the merchant server MSV, to the headphone HPH (SC→HPH: AUD[MSVID]). Accordingly, the user, who wears the headphone HPH, can hear the identity of the merchant server MSV. Moreover, the user can be sufficiently sure that this identity is correct, because the audio signal stems from the certificate of the merchant server MSV. The user can thus be sufficiently sure that the merchant server MSV, with whom he or she appears to communicate, truly is that merchant server MSV and not an impostor. The user can abort communication if he or she hears an identity that is incorrect. It will be assumed hereinafter that the user hears a correct identity through the headphone HPH.

In step ST8, which is illustrated in FIG. 7B, the smartcard SC establishes a so-called session key in cooperation with the merchant server MSV (SES[MSV]). The smartcard SC uses the session key to encrypt data that the personal computer PC sends to the merchant server MSV via the network NW. The merchant server MSV uses the session key to decrypt that data. Conversely, the merchant server MSV uses the session key to encrypt data sent to the personal computer PC and the personal computer PC uses the session key to decrypt that data. Accordingly, an exchange of data between the personal computer PC and the merchant server MSV remains confidential. It will be assumed hereinafter that the exchange of data involves a particular electronic transaction, namely a purchase. The user selects one or more goods and services that the user wishes to purchase. Each good and service has a particular price. Specific purchase conditions may apply.

In step ST9, the smartcard SC receives transaction data from the merchant server MSV (MSV→SC: TRE). The transaction data defines the good and services that the user wishes to purchase, the respective prices, and other transaction details. These details may include, for example, a transaction number, a date of purchase, a delivery date, a delivery address, any delivery costs, a vendor's name, and so on.

The transaction data comprises audio data, which represents at least a portion of the transaction data (ADT2∈TRE). The audio data may also comprise a particular acceptance procedure. The acceptance procedure corresponds with a particular user action, such as, for example, an entry of a particular key sequence, or a particular mouse click, a click on a particular object that the personal computer PC displays. The audio data, which is comprised in the transaction data, may have any of numerous different formats. Some examples have been described hereinbefore with respect to step ST6.

In step ST10, the smartcard SC establishes an audio signal on the basis of the audio data, which is comprised in the transaction data (ADT2⇒AUD[TRE]). Any suitable software may transform the audio data into the audio signal, as explained hereinbefore respect to step ST7. The smartcard SC applies the audio signal, which represents relevant transaction data, to the headphone HPH (SC→HPH: AUD[TRE]). Accordingly, the user, who wears the headphone HPH, can hear the transaction data. The user can be sufficiently sure that this transaction data is correct. In addition, the user can hear the acceptance procedure, which may be comprised in the audio data as explained in before. It is also possible that the smartcard SC generates an acceptance procedure and provides an audio signal that represents this acceptance procedure. The user can decide whether he will pursue the electronic transaction or not.

In step ST11, the smartcard SC checks whether the user wishes to pursue the transaction or not (ACC?). There are various different manners to do so. For example, the smartcard SC may signal the personal computer PC, via the universal serial bus path USBP, that the smartcard SC expects a user action. The personal computer PC transfers data to the smartcard SC, which reflects the user action following the audio signal of step ST10. Such data transfer takes place via the universal serial bus path USBP. Accordingly, the smartcard SC can check whether the user has followed the acceptance procedure or not. As another example, the smartcard coupler BX may comprise an accept button and a reject button, which the user may depress.

The smartcard SC may abort step ST11 if there is no reaction within a predefined time interval. In that case, the smartcard SC may apply anew the audio signal, which represents relevant transaction data and the acceptance procedure, to the headphone HPH. The question is repeated. Alternatively, the smartcard SC may consider that the user does not wish to pursue the transaction if there is no reaction within the predefined time interval. It will be assumed hereinafter that the user wishes to pursue the transaction and, consequently, has followed the acceptance procedure.

In step ST12, the smartcard SC establishes an electronic signature on the basis of the audio data, which represents the transaction data (SGN[ADT2]⇒TRC). The electronic signature forms a transaction confirmation. The smartcard SC transmits the electronic signature to the merchant server MSV, via the personal computer PC and the network NW (SC→MSV: TRC). The personal computer PC may keep a copy of the electronic signature. The smartcard SC may also store the electronic signature in the nonvolatile memory NVMEM.

The audio data may be relatively voluminous in terms of number of bits. In such a case, the audio data may be reduced before it is signed. This reduction should preferably be unambiguous. A so-called hashing algorithm can be applied in order to reduce the audio data in an unambiguous manner. Hashed audio data can be signed by means of an electronic key that uniquely belongs to the smartcard SC.

The electronic signature proves that the user has accepted the transaction that he has heard via the headphone HPH. Conversely, the user is sufficiently sure that what he or she signs, truly represents that want he or she has agreed to and accepted. Accordingly, the above-described procedure offers a guarantee that is similar to one which exists in a face-to-face transaction.

### CONCLUDING REMARKS

The detailed description hereinbefore with reference to the drawings illustrates the following characteristics. A tamper-resistant device (smartcard SC) is arranged to secure an electronic transaction with a remote entity (merchant server MSV). The tamper-resistant device comprises a processor (integrated circuit IC) arranged to provide (step ST3; step ST10) an audio signal (AUD) that produces a spoken text when applied to an electro-acoustic transducer (headphone HPH) via an audio-signal path (AUDP). The processor is preferably arranged to manage (step ST4; step ST11) the electronic transaction in dependence on a data (RESP; ACC) that the processor receives subsequent to the audio signal.

The aforementioned characteristics can be implemented in numerous different manners. In order to illustrate this, some alternatives are briefly indicated. The tamper-resistant device may have any physical form. A smartcard is merely an example. The tamper-resistant device may be in the form of, for example, a so-called token device that can be coupled to a personal-computer port. Preferably, the tamper-resistant device weighs sufficiently light and is sufficiently small so that tamper-resistant device fits in a pocket of a garment or a wallet, just like a physical key.

The tamper-resistant device may communicate with the remote entity in numerous different manners. For example, the tamper-resistant device may be electrically coupled to a cellular phone and communicate with the remote entity via a cellular phone network. The cellular phone is a user station, or terminal, like a personal computer. Furthermore, the tamper-resistant device may use any conceivable format or standard to communicate with a device to which the tamper-resistant device is electrically coupled. Universal serial bus communication, although advantageous, is merely an example. For example, the tamper-resistant device may be a classical smartcard that communicates in accordance with ISO standards 7816-3/4 only. In that case, contact C6 may advantageously be used as an audio output.

The electronic transaction need not necessarily concern a purchase of goods or services. The electronic transaction may concern, for example, the request of a copy of an official document. Furthermore, the tamper-resistant device may carry out an electronic transaction with any type of remote entity. Remote entity is a term that should broadly be interpreted. For example, an automatic teller machine (ATM) or a point-of-sales (POS) terminal can be a remote entity in the context of the invention.

The tamper-resistant device may be arranged to provide an audio signal at any point of the electronic transaction. For example, the tamper-resistant device can ask, by means of the audio signal, for random actions at various different stages of the electronic transactions. The tamper-resistant device may speak, as it were, only once during the electronic transaction. For example, the tamper-resistant device may speak only once to inform the user what data he or she is about to sign. Referring to FIGS. 7A and 7B, this corresponds with omitting steps ST3-ST5 and step ST7. Step ST10 is then the only step where the tamper-resistant device speaks. Step ST11 is then the only step where the tamper-resistant device subsequently manages the electronic transaction in dependence on response data. In this case, management corresponds with a decision on whether to pursue the electronic transaction or not. Other forms of management are possible such as, for example, a modification of the electronic transaction. Verification of a personal identification number is also a form of management.

There are numerous different techniques to generate an audio signal that produces a spoken text when applied to an electro-acoustic transducer. Many speech-synthesis algorithms exist. It is also possible to use recordings of words of groups of words in a digital audio format. The audio signal can be such that there is an association with a specific voice. This enhances security. When the user hears the specific voice, he or she can be sufficiently sure that the spoken text originates from the tamper-resistant device. The user knows that it is the tamper-resistant device that is talking to him or her. Spoken text with a different voice may originate from an imposter.

The audio signal may have any suitable format. FIG. 4 merely illustrates an example. The processor, which provides the audio signal, may be arranged to provide an analog audio signal instead of a digital audio signal. Many different formats exist for digital audio signals. In principle any of those formats is suitable. The audio-signal path may have electrical characteristics different from those illustrated in FIG. 6. For example, the audio-signal path may include an amplifier if needed. The electro-acoustic transducer may have a low-pass characteristic. In that case, the audio-signal path need not comprise a low pass filter. The audio-signal path may even be in the form of a simple pair of wires. The electro-acoustic transducer may be a loudspeaker instead of headphone. In public places, a headphone is preferred for reasons of security. In private places, such as home, a loudspeaker can be used.

There are numerous ways of implementing functions by means of items of hardware or software, or both. In this respect, the drawings are very diagrammatic, each representing only one possible embodiment of the invention. Thus, although a drawing shows different functions as different blocks, this by no means excludes that a single item of hardware or software carries out several functions. Nor does it exclude that an assembly of items of hardware or software or both carry out a function.

The remarks made herein before demonstrate that the detailed description with reference to the drawings, illustrate rather than limit the invention. There are numerous alternatives, which fall within the scope of the appended claims. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps.

## Claims

1. A tamper-resistant device (SC) arranged to secure an electronic transaction with a remote entity (MSV), the tamper-resistant device comprising:
- a processor (IC) arranged to provide (ST3; ST10) an audio signal (AUD) that produces a spoken text when applied to an electro-acoustic transducer (HPH) via an audio-signal path (AUDP).

2. A tamper-resistant device as claimed in claim 1, wherein the processor (IC) is arranged to manage (ST4; ST11) the electronic transaction in dependence on a data (RESP; ACC) that the processor receives subsequent to the audio signal.

3. A tamper-resistant device as claimed in claim 1, wherein the processor (IC) is arranged to cause (ST10) the audio signal (AUD) to represent a data element (ADT2) that forms part of the electronic transaction.

4. A tamper-resistant device as claimed in claim 3, wherein the processor (IC) is arranged to establish (ST12) a digital signature (SGN[ADT2]) on the basis of the data element (ADT2) that the audio signal (AUD) represents.

5. A tamper-resistant device as claimed in claim 1, wherein the processor (IC) is arranged to cause (ST7) the audio signal (AUD) to represent an identity (MSVID) of the remote device (MSV) following a reception of a certificate (CERT[MSV]) that certifies the identity of the remote entity.

6. A tamper-resistant device as claimed in claim 1, wherein the processor (IC) is arranged to cause (ST3) the audio signal (AUD) to represent a request for a confidential code (PIN), which should be known to a rightful user.

7. A tamper-resistant device as claimed in claim 6, wherein the processor (IC) is arranged to request (ST2,ST3) the confidential code (PIN) in accordance with a particular modification that is randomly chosen (RND) among various different possible modifications.

8. A tamper-resistant device as claimed in claim 1, wherein the audio signal (AUD) comprises a digital audio signal that is convertible into an analog audio signal by means of a low-pass filter (FIL).

9. A tamper-resistant device as claimed in claim 1, wherein the tamper-resistant device (SC) can removably be coupled to a user station (PC) that is arranged to communicate with the remote entity (MSV).

10. A tamper-resistant device as claimed in claim 9, wherein the tamper-resistant device (SC) conforms with part 2 of the ISO7816 standard, at least one of contacts C2, C3, C6 and C7 defined in the standard forming an output via which the audio signal (AUD) can be applied to the electro-acoustic transducer (HPH).

11. A processor (IC) for use in a tamper-resistant device as claimed in claim 1.

12. An electronic transaction system (ETS) comprising a tamper-resistant device (SC) as claimed in claim 1, wherein the remote entity (MSV), which forms part of the electronic transaction system, is arranged to transmit voice data (ADT1, ADT2) to the tamper-resistant device.

13. A method of securing an electronic transaction with a remote entity (MSV) by means of a tamper-resistant device (SC), the method comprising:
- an audio-signal delivery step (ST3, S10) in which the tamper-resistant device (SC) provides an audio signal (AUD) that produces a spoken text when applied to an electro-acoustic transducer (HPH) via an audio-signal path (AUDP).

14. A method as claimed in claim 13, where the method comprises:
- a processing step (ST4; ST11) in which the tamper-resistant device manages the electronic transaction in dependence on a data (RSP, ACC) that the tamper-resistant device receives subsequent to the audio signal.

15. A computer-program product for a tamper-resistant device (SC) arranged to secure an electronic transaction with a remote entity (MSV), the computer-program product comprising a set of instructions that, when loaded into the tamper-resistant device, causes the tamper-resistant device to carry out:
- an audio-signal delivery step (ST3, S10) in which the tamper-resistant device (SC) provides an audio signal (AUD) that produces a spoken text when applied to an electro-acoustic transducer (HPH) via an audio-signal path (AUDP)

16. A computer-program product as claimed in claim 15, where the set of instructions causes the tamper-resistant device to carry out:
- a processing step (ST4; ST11) in which the tamper-resistant device manages the electronic transaction in dependence on a data (RSP, ACC) that the tamper-resistant device receives subsequent to the audio signal.

17. A coupling device (BX) via which a tamper-resistant device (SC) as claimed in claim 1 can be coupled to a communication apparatus (PC), the coupling device comprising an audio-signal path (AUDP) arranged to transfer the audio signal (AUD) from the tamper-resistant device to an electro-acoustic transducer (HPH).

18. A coupling device (BX) as claimed in claim 17, wherein the audio signal path (AUDP) is arranged so that the tamper-resistant device (SC) has exclusive access thereto.
